(19) Europäisches Patentamt
European Patent Office
Office européen des brevets

(11) **EP 4 318 169 A1**

(12) **EUROPEAN PATENT APPLICATION**

(43) Date of publication:
**07.02.2024 Bulletin 2024/06**

(21) Application number: **22306193.8**

(22) Date of filing: **06.08.2022**

(51) International Patent Classification (IPC):
**G05D 7/06** (2006.01)　　　**G05D 16/20** (2006.01)
**G05B 13/04** (2006.01)

(52) Cooperative Patent Classification (CPC):
**G05D 16/2006; G05B 13/048**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fluigent
94270 Le Kremlin-Bicêtre (FR)**

(72) Inventor: **GLAVANA, Cristian
78220 Viroflay (FR)**

(74) Representative: **Bandpay & Greuter
30, rue Notre-Dame des Victoires
75002 Paris (FR)**

Remarks:
Amended claims in accordance with Rule 137(2)
EPC.

(54) **METHOD FOR PRESSURE REGULATION IN A FLUIDIC SYSTEM**

(57)　The invention relates to a method for controlling pressure in a fluidic system, the method comprising:
- providing:
o a plurality of measurements from a pressure sensor, and)
o a pressure setpoint,

- computing a predictive model using at least a part of the measurements;
- computing a deviation between a value of one of the plurality of measurements and a value of the setpoint; the deviation being further based on the predictive model;
- computing a gain being based on the value of the setpoint and/or on the value of the one of the plurality of measurements;
- computing a first correction factor based on the computed deviation and the computed gain;
- computing a second correction factor based on the computed deviation, the computed gain and a previous value of the second correction factor;
- computing an actuator command based on the first correction factor and the second correction factor; and
- applying the computed actuator command to the fluidic system via one or more actuators configured to modify a value of the pressure.

Fig. 23

EP 4 318 169 A1

**Description**

TECHNICAL FIELD

The present invention relates to a method for controlling pressure in a fluidic system. More specifically, the invention proposes a method able to control pressure in a fluidic system in order to provide and to control flow rate in a fluidic system, with a performance and simplicity superior to previous art.

TECHNICAL BACKGROUND

Many methods have been proposed to regulate or control gas pressure or flowrate in (fluidic) systems with active parts such as valves or pumps. These methods usually exploit a closed-loop control system. Closed-loop systems use feedback where a portion of an output signal from the system is fed back to the inlet of the system to reduce errors and improve stability. Closed-loop systems are designed to automatically achieve and maintain the desired output condition by comparing it with the actual condition. Multiple methods can be employed in order to control a closed-loop system, as known in the field of control theory. The field of control theory deals with the control of dynamical systems in engineering processes and machines. The objective of the field is to develop a control model for controlling such dynamical systems using a control action in an optimum manner without delay or overshoot while ensuring control stability. Some closed-loop control techniques use linear models, deterministic system control, fuzzy logic, and/or machine learning.

One of widely used control techniques in control systems is PID (proportional-integral-derivative) controlling or its simpler variants such as PI (proportional-integral) or PD (proportional-derivative) controlling. Such controlling techniques have the advantage of requiring very few computation steps and does not involve physical equations or simulation for a robust result. However, these methods lack the adaptation capabilities if the system is changed physically. In other words, when the parameters of a controller are optimized for one use case, considerable changes in the system (e.g., changing a valve or a pump) decay overall performances of the controller and may lead to instabilities. Furthermore, these methods require compromising between system response time and system stability.

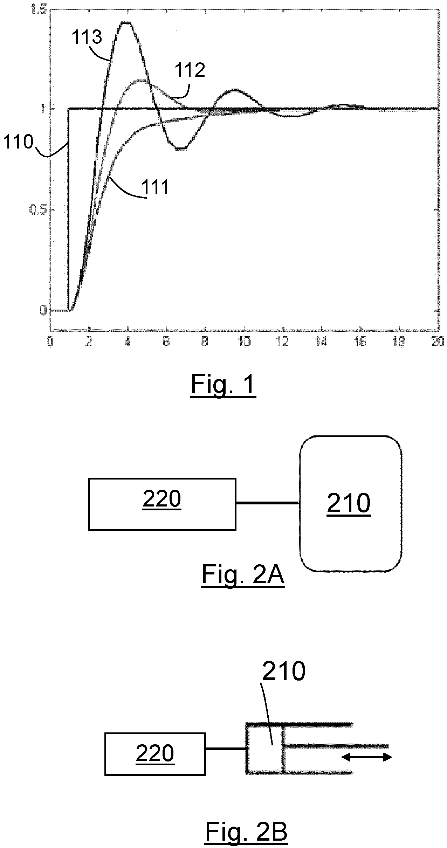

Presented in **figure 1** is the current response profile 111, 112, and 113 of a PID system to a command 110 (from 0 to 1). Depending on used parameters response time may be improved from 111 to 113 but at the cost of additional instabilities and overshoots. Furthermore, the PID parameters are correlated to the fluidic set-up (which comprises, e.g., actuator, reservoir size, pressure range, and/or tubing). Any change in the fluidic set-up (e.g., increased pressurized reservoir volume) leads to a different response profile and a PID which is set for the initial set-up is no longer well-tuned.

The prior art does not solve at least part of abovementioned criteria in controlling pressure concerning the delay, overshoot, control stability, and/or adaptation capability. There is thus a need for a method for controlling pressure in a fluidic system.

SUMMARY OF THE INVENTION

The invention relates among others to the following items.

Item 1. A method for controlling pressure in a fluidic system, the method comprising:

- providing:

    ∘ a plurality of measurements from a pressure sensor, and
    ∘ a pressure setpoint,

- computing a predictive model using at least a part of the measurements;
- computing a deviation between a value of one of the plurality of measurements and a value of the setpoint; the deviation being further based on the predictive model;
- computing a gain being based on the value of the setpoint and/or on the value of the one of the plurality of measurements;
- computing a first correction factor based on the computed deviation and the computed gain;
- computing a second correction factor based on the computed deviation, the computed gain and a previous value of the second correction factor;
- computing an actuator command based on the first correction factor and the second correction factor; and
- applying the computed actuator command to the fluidic system via one or more actuators configured to modify a value of the pressure.

Item 2. The method of item 1, wherein the fluidic system comprises a reservoir, and wherein:

- the pressure sensor measures the pressure in the reservoir; and
- each of the one or more actuators is an electro-valve, a pump, or a compressor.

Item 3. The method of any of items 1 to 2, wherein the using of at least a part of the measurements comprises using a time history of stored measurements from the pressure sensor.

Item 4. The method of any of items 1 to 3, wherein the predictive model is a linear regression model, and wherein preferably:

- the computing of a linear regression model comprises obtaining a slope, and
- the computing of a deviation is based on the slope.

Item 5. The method of item 4, wherein the computing of a deviation comprises:

- computing a difference between a value of one of the plurality of measurements and a value of the setpoint; and
- modifying the difference by a term dependent on the slope, preferably with a polynomial dependency on the slope, and more preferably with a linear dependency on the slope.

Item 6. The method of any of items 1 to 5, wherein the computed gain is related to the value of the setpoint, preferably quadratically related.

Item 7. The method of any of items 1 to 5, wherein:

- the computed gain is quadratically related to the value of the setpoint when the value of measurement is less than the setpoint; and
- the computed gain is quadratically related to the value of measurement when the value of measurement is above the setpoint.

Item 8. The method of any one of items 1 to 7, wherein the actuator command is a summation of the first correction factor and the second correction factor, preferably upon a scaling.

Item 9. The method of any of items 1 to 8, wherein the computing of the first correction factor comprises a multiplication of the square of the computed deviation by the computed gain.

Item 10. The method of any of items 1 to 9, wherein the computing of a second correction factor based on the computed deviation comprises a summation of:

- a multiplication of the computed deviation by the computed gain, and
- a previous value of the second correction factor.

Item 11. The method of any of items 1 to 10, wherein the computing of a second correction factor comprises applying a low pass filter to the second corrector factor, the low pass filter being based on the previous value of the second correction factor.

Item 12. The method of any of items 1 to 11, wherein the method further comprises linearizing the computed actuator command.

Item 13. The method of any of items 1 to 12, wherein

- the providing of the measurements from the pressure sensor has a first refresh rate,
- the computing of a predictive model, the computing of a deviation, the computing of a gain, the computing of a first correction factor, the computing of the second correction factor, and the computing of an actuator command have a second refresh rate, and
- the applying of the computed actuator command to the fluidic system via one or more actuators has a third refresh rate;

wherein preferably the third refresh rate is larger than the first refresh rate, and the second refresh rate is larger than each of the first and the third refresh rate.

Item 14. A control apparatus configured for carrying out the method of any of items 1 to 13.

Item 15. A computer program comprising instructions which, when the program is executed by a computer, cause the computer to carry out the method of any of items 1 to 13.

Item 16. A non-transitory computer readable storage medium having stored thereon the computer program of item 15.

Item 17 .The method of any of items 1 to 13, comprising an initialization step, wherein a range of pressure values comprising a maximum pressure value is provided.

Item 18. The method of item 17, comprising normalizing each measurement and the setpoint with respect to the range of pressure values.

Item 19. The method of item 17 or 18, comprising one or more update steps each configured to modify the range of values for the pressure.

Item 20. The method of any one of items 1 to 13 or 17 to 19, wherein the computed gain may not be less than a minimum threshold and may not be more than a maximum threshold; the minimum threshold being preferably from 0.005 to 0.05, more preferably from 0.01 to 0.02; and the maximum threshold being preferably from 0.2 to 0.6, more preferably from 0.35 to 0.45.

Item 21. The method of any one of items 1 to 13 or 17 to 20, wherein the first and/or the second correction factor may not modify the actuator command by more than a maximum amount, said maximum amount being preferably comprised between $\pm$ 30% and $\pm$ 100%, more preferably between $\pm$ 50% and $\pm$ 70%.

Item 22. The method of any one of items 1 to 13 or 17 to 21, wherein the previous value of the second correction factor is set based on a feedback measurement from an actuator.

Embodiments of the present invention make it possible to control (i.e., regulate) the pressure and/or flowrate in a fluidic system using closed-loop control algorithms based on predictive methods and real-time physical system modelling so as to be adaptable in any conditions as long as the system concerns gas pressure or flowrate active regulation. Embodiments of the present invention make such a control possible while minimizing gas consumption and power consumption, and/or maximizing maximal achievable pressure and flowrate from an input source.

Such embodiments enable controlling of a closed-loop system involving gas pressure in an optimum manner, i.e., fast response time, avoid overshoots, low delay, control stability and robustness with respect to physical parameters such as pressurized reservoir size

In particular, the invention constitutes an improved solution in controlling pressure in a fluidic system by computing a predictive model of the measurements. Such a predictive model enables the control method to "predict" behavior (i.e., of the fluidic system). Thereby, when being provided by the pressure measurements of the fluidic system and a pressure setpoint, the method is able to compute a deviation between a target behavior of the fluidic system (which is inputted as the set pressure setpoint) and a value based on the predictive model and compute/apply the actuator command based on such a deviation.

As known perse in the field of fluid mechanics the pressure (or the pressure difference) and a flowrate depend on each other. Hence, the method also enables controlling a flowrate in an optimum manner via controlling the pressure in a respective section of the fluidic system.

BRIEF DESCRIPTION OF THE DRAWINGS

**Figure 1** shows several response profiles of a comparative algorithm based on PID, not according to the invention. The horizontal axis represents time (e.g., in seconds) and the vertical axis represents the pressure response in a corresponding unit (e.g., a pressure response in Pa or mbar).

Figures 2A-B show schematic examples of closed reservoirs.

**Figure 3A** shows a schematic view of a pressurization set-up using a pump, **figure 3B** shows a schematic view of a pressurization set-up with a check valve-based pump, and orifice; **Figure 3C** shows a schematic view of a pressurization set-up comprising an active valve or variable orifice.

**Figure 4** shows pressure evolution over time when pressurizing a reservoir. The horizontal axis represents time (e.g., in seconds) and the vertical axis represents the pressure in the reservoir (e.g., in Pa or mbar).

**Figure 5** represents relationship between pressure and flowrate while pressurizing a reservoir.

**Figure 6** shows relationship between applied voltage and generated flowrate of a proportional valve. The horizontal axis represents voltage (e.g., in Volts) and the vertical axis represents the flow rate response in a corresponding unit (e.g., l/s).

**Figure 7** shows relationship between applied power and generated pressure of a piezoelectric pump pressurizing an enclosed volume. The horizontal axis represents power (e.g., in Watt) and the vertical axis represents the pressure response in a corresponding unit (e.g., a pressure response in Pa or mbar).

**Figure 8A** represents pressure evolution over time while rapidly pressurizing a closed volume. The horizontal axis represents time (e.g., in seconds). Pressure increase is consequent in this case. **Figure 8B** represents water hammer relationship between tubbing length (in cm) and period of generated oscillations (in ms).

**Figure 9** represents pressure evolution over time while a small amount of air is rapidly injected into a closed volume. The horizontal axis represents time (e.g., in seconds) and the vertical axis represents the pressure response in a corresponding unit (e.g., a pressure response in Pa or mbar).

**Figure 10** shows an example of noise captured at high frequency by a pressure sensor while pressure is disrupted. The horizontal axis represents time (e.g., in seconds) and the vertical axis represents the pressure noise in a corresponding unit (e.g., a pressure response in Pa or mbar).

**Figure 11** is a flow chart representation of initialization steps of the algorithm.

**Figure 12** is a flow chart exposing how input values are normalized.

**Figure 13** is a flow chart of steps related to range update of the algorithm.

**Figure 14A** and **14B** illustrates an example of use of linear regression to deduce future pressure evolution in the system.

**Figure 15** is a flow chart exposing a principle of rotary buffer used to store data.

**Figure 16** is a flow chart of a method of computing linear regression.

**Figure 17** shows a modulization of a gain value depending on working pressure.

**Figure 18** is a flow chart representing two distinct computations of a gain depending on system error sign.

**Figure 19** is a flow chart of a first computed correction factor.

**Figure 20** is a flow chart of a second computed correction factor.

**Figure 21** shows an example of normalization of a valve actuator command profile.

**Figure 22** is a flow chart summarizing all steps performed by the algorithm.

**Figure 23** represents an experimental set-up composed of a pump, a fixed leak, a reservoir, a pressure sensor and a driving circuit.

**Figure 24** shows pressure over time response of experimental set-up of **figure 23** comparing exposed method with a PID algorithm of current state of the art. The horizontal axis represents time (e.g., in seconds) and the vertical axis represents the pressure response in a corresponding unit (e.g., a pressure response in Pa or mbar).

**Figure 25** shows actuator command over time of experimental set-up pf **figure 23** comparing exposed method with a PID algorithm of the current state of the art. The horizontal axis represents time (e.g., in seconds) and the vertical axis represents the actuator command in a corresponding unit (e.g., mW).

**Figure 26** shows pressure over time response profile for the experimental set-up of **figure 23** and for different pressure setpoints. The horizontal axis represents time (e.g., in seconds) and the vertical axis represents the pressure response in a corresponding unit (e.g., a pressure response in Pa or mbar).

**Figure 27** shows pressure over time response profile for same pressure setpoint but for different pressurized reservoir size. The horizontal axis represents time (e.g., in seconds) and the vertical axis represents the pressure response in a corresponding unit (e.g., a pressure response in Pa or mbar).

## DESCRIPTION OF EMBODIMENTS

Embodiments of the invention will now be described in more detail without limitation in the following description.

The invention relates to a method for controlling pressure in a fluidic system. A "fluidic system" designates a combination of one or more instruments associated to exert one or several tasks in relation to one or more fluids, namely one or more liquids, and/or one or more gases. By "instrument" is meant an integrated device that is able to perform at least one function without the addition of additional components other than components available in the operational environment, such as for instance an energy source, or consumables. A fluidic system may comprise at least one channel but optionally comprises other components. A fluidic system may comprise components which are fluidic in their nature and/or function. Fluidic systems may involve different levels of integration. For instance, they can be restricted to a single fluidic chip or component, integrating one or several functionalities. Fluidic systems used in the invention may also comprise other kinds of elements and components, some of which are described here, such as pumps, valves, sensors, actuators, detectors, and many others known in the art, which are encompassed within the scope of the invention. In particular, fluidic systems may also be full instruments and comprise for instance any of holders, housings, power sources, control software and hardware, communication means, storage means, manipulation means, human-machine interfaces.

The fluidic system may notably be a microfluidic, millifluidic, or nanofluidic system or any combination thereof. By "millifluidic system" is meant a fluidic system in which the minimal channel dimension is of the order of 1-10 mm. By "microfluidic system" is meant a fluidic system in which the minimal channel dimension is of the order of 1 to less than $1000\mu$m. By "nanofluidic system" is meant a fluidic system in which the minimal channel dimension is of the order of less than $1\mu$m.

By "fluidic chip" or equivalently "chip", or equivalently "fluidic component", is meant an object comprising at least one channel, or at least one combination of channels. The channel or combination of channels are embedded at least in part in a matrix. Fluidic chips or devices may be microfluidic chips or devices, i.e., comprise at least one microchannel (channel having a minimum dimension of the order of 1 to less than 1000 $\mu$m). Fluidic chips or devices may be millifluidic chips or devices, i.e., comprise at least one millichannel (channel having a minimum dimension of the order of 1-10 mm). Fluidic chips or devices may be nanofluidic chips or devices, i.e., comprise at least one nanochannel (channel having a minimum dimension of less than 1 μm). Fluidic chips or devices may comprise any combination of millichannels, nanochannels or microchannels.

The fluidic system may be described by one or more variables. Each variable may be measured at a specific location of the fluidic system and at one or more time instants. By "being described by one or more variables" is meant that the one or more variables is/are capable of determining the "state" of the system for example via some physical governing equations or some models based on such equations. The one or more variables may comprise sufficient information, at each time instant, to determine a behavior of the system in the future. The one or more variables may be equivalently referred to as "state variables", hereinafter. In particular examples, the one or more variables is pressure measured at a specific location of the fluidic system, for example at the inlet or outlet of the fluidic system, or inside a closed reservoir.

The method for controlling, i.e., the "controlling method", comprises providing a plurality of measurements from a pressure sensor. The plurality of measurements may form a time history of pressure measurements at a specific location of the fluidic system. By a "time history of pressure measurements at a specific location" is meant a history of measurements of pressure at the specific location each at a different time instant thus forming a history of changes of the pressure at the specific location.

In examples, the pressure sensor may be connected to the fluidic system, for example electrically, mechanically, magnetically, and/or by any other known method to connect a pressure sensor so as to enable it to measure a pressure of the fluidic system. The pressure sensor may be connected to or be a part of a control apparatus or equivalently a control unit configured to carry out the method of control described herein. In examples, the fluidic system may comprise or may be connected to such a control apparatus. The control apparatus may comprise a drive circuit, i.e., a driver board. As known per se, a drive circuit is a circuit or component used to control a system. In examples, the driver board comprises a mainboard with a microcontroller which is in charge of managing the pressure sensor's reading, computing an activation command and applying the command to different actuators as discussed hereinbelow. The driver board may comprise power stages to ensure proper voltage supply for different components of the system as well as power control of the actuators.

In examples, the pressure sensor may be a pressure transducer measuring gas pressure at a system outlet (i.e., where gas is configured to leave the system) or inlet (i.e., where gas is configured to enter the system), or a gas flow transducer measuring pressure at a system outlet or inlet.

Additionally, the control apparatus may comprise a current sensor measuring power supplied to a pump (in fluidic systems with a pump) or a valve, and a tachometer measuring a pump rotation (in fluidic systems with a pump, e.g., with an integrated pump).

In examples, the fluidic system may comprise two reservoirs A and B which are fluidically connected. The pressure may be measured in reservoir A by a pressure sensor, whereas the actuator may adjust pressure in reservoir B. The controlling method allows an effective pressure control also in this case.

The controlling method further comprises providing a pressure setpoint. The pressure setpoint may determine a setpoint value, i.e., a target value for the pressure. The controlling method may seek to adjust the pressure (which is subject to the provided measurements), so that its value is maintained (at least significantly) equal to the setpoint. By two values being "significantly equal" is meant that the difference (e.g., an absolute value of the difference) between the two values is less than a threshold. Such a threshold may be, for example, less than 10%, 5%, 2%, or 1%, of one of the two values. In examples, the pressure setpoint may change by the controlling method for example in the course of the time. In other words, in such examples, the controlling method comprises providing the pressure setpoint multiple times. This constitutes an improved solution for adaptation capabilities of the method to control the fluidic system in case of considerable change in the system as discussed above.

In order to compute an actuator command, the controlling method then computes a predictive model using part of the measurements from the pressure sensor and computes a deviation between a value of the plurality of measurements and a value of the setpoint. The computed deviation represents a difference between the measurements and the pressure setpoint. The deviation is further based on the predictive model. The computed predictive model may be a linear or nonlinear regression model and enables the method to predict a behavior of the fluidic system (e.g., in response to an actuator command) based on the measurement(s) from the pressure sensor(s). Examples of computing predictive model are discussed hereinbelow.

The computing of the actuator command may be at least partially based on the computed deviation. In other words, the method may compute the actuator command based on how far the state of the system (corresponding to the measurements) is from a target state described by the setpoint.

More specifically, the method computes the actuator command based on a first correction factor and a second connection factor. The computing of the first correction factor is based on a computed deviation and the computed gain and the computing of the second correction factor is based on the computed deviation, the computed gain and a previous value of the second correction factor. The computed gain is based on the value of the setpoint and/or on the value of the corresponding measurement.

In examples, the first correction factor may have a role similar to proportional part of a PID or PI controller (i.e., a proportional corrector) while the second correction factor may have a role similar to an integral part in a PID or PI controller (i.e., an integral corrector). However, contrary to a conventional PID or PI controller, the controlling method makes use of a predictive model. Thereby, the method provides a PID, or PI controller based on a deviation computed according to a predictive model. This improves the stability of the controlling method as the method is able to predict the near future of the system based on the obtained information.

The controlling method then applies the computed actuator command to the fluidic system via one or more actuators configured to modify a value of the pressure, thereby modifying the corresponding measurements of the pressure (when the next measurements are performed). By "applying an actuator command via an actuator to a system" is meant to apply a control signal corresponding to an actuator command to a system. As known per se an actuator is a component responsible for controlling a system. Each of the one or more actuators may be a hydraulic, pneumatic, thermal, magnetic, electric (e.g., electrohydraulic, or electromechanical), or a mechanical actuator. Each of the one or more actuators may modify a value of the pressure upon receiving a control signal by modifying a parameter of a component in the fluidic system, for example, by modifying an aperture of a valve, or a voltage applied to a pump.

The one or more actuators may comprise one or more of the following: a proportional electro valve equivalent to a variable orifice driven by an electric component (such as a coil or a piezo material), an on/off electro valve equivalent to a closed path or a fixed orifice driven by an electric component (such as a coil or a piezo material), or a pneumatic component, or a component which uses sound and/or light as the control signal, a gas pump providing a pressure differential and a flowrate, characterized by low output fluctuations and high drive frequency (e.g., over 50 Hz) or rotation speed (e.g., over 50 rpm). Such pumps may be resonant or not, piezoelectric, centrifugal or turbine.

The pressure sensor, and each of the one or more actuators may be connected and controlled by the drive circuit as discussed above.

In examples, the controlling method may seek to control the pressure of the fluidic system at more than one location by measurements from respective pressure sensors at said locations. In such examples, the controlling method may comprise providing a plurality of measurements from each respective pressure sensor and a respective setpoint corresponding to a target pressure at said location of the system. The remaining steps of the method may be carried out in parallel and for each location, to obtain a respective control command for the setpoint for the location. The method may be computer-implemented. A typical example of computer-implementation of a method is to perform the method with a system, for example a computer, a microcontroller, or any other embedded device adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for a database).

Hardware set-up

The fluidic system controlled by the controlling method may have different hardware set-ups (i.e., configurations). A set-up may comprise components to pressurize and/or depressurize. A pressurization module may comprise components to pressurize, i.e., to generate pressure (and optionally to generate flow rate consequently in a direction), and a depressurization module may comprise components to depressurize (and to generate flow rate consequently in a direction), i.e., to bring pressure down. Alternatively or additionally, a set-up may comprise a target (e.g. gas) reservoir fluidically connected to an outlet of the fluidic system. The reservoir (i.e., container) may be open or closed. An example of a closed reservoir 210 is presented in figures 2A-B. Such containers may be sealed or with negligible leakage (e.g., compared to a volume of the container) with either a constant **(figure 2A)** or modifiable volume **(figure 2B)**. The controlling method may accumulate gas (and pressure) in a closed reservoir for different applications. The examples provided in figures 2A-B comprise an output 220.

In examples, the set-up may have pressurization and depressurization modules if it further comprises a target reservoir with constant volume or with a volume which changes at a slow rate. Alternatively, in examples where the set-up comprises an open reservoir it may only comprise a pressurization module.

The fluidic system may be fluidically connected (at least via an opening) to a reference pressure, for example a reservoir with said reference pressure. In examples, the reference pressure may be the atmosphere pressure.

By A being "fluidically connected" to B, is meant that gas may flow between A and B, i.e., the fluid path between A and B is not fully closed.

The fluidic system according to such scenarios may comprise one or more connection devices. Each of the one or more connection devices may comprise a duct. The size and material of the duct may be chosen according to the well-known practice and/or standard. Each duct may be linear or branched. Alternatively, by "connection device" can also be meant a direct connection without any intermediary duct. For example, any pump may be directly connected to any valve.

The fluidic system may comprise passive components, for example a fixed orifice, to provide a junction between a system pressure and the atmosphere by inducing a pressure difference. Such a pressure difference provides a corresponding air flow through the orifice which may improve system stability and allow depressurization without need of an active control.

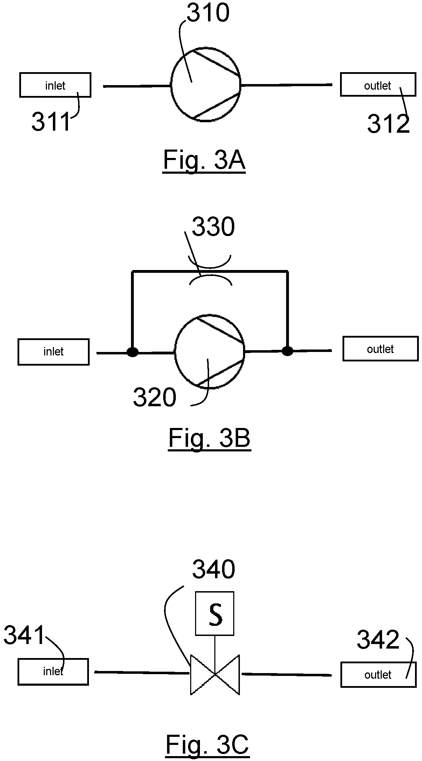

Examples of a system with a pressurization module are represented in figures 3A-C. Such configurations may be configured to increase or maintain stable a pressure or flowrate.

In the configuration of **figure 3A** a compressor (or a pump) 310 is used to generate pressure and/or flowrate and is capable of being regulated and are able to work in positive or vacuum pressure depending on the direction of flow. This is the case for some high frequency or rotary speed driven pumps. The inlet 311 may be at the atmospheric condition or at any other reference pressure. The configuration of **figure 3A** may be used to produce vacuum by reversing the direction of the compressor (or the pump) 310 and without need of passive regulator (i.e., when the direction of the flow is from the outlet 312 to the inlet 311).

The configuration of **figure 3B** is an improvement over single pump configuration of **figure 3A** where a fixed leakage via 330 (which may model internal leakage by, e.g., a check valve of pump which is not completely sealed) is introduced between the inlet 321 of the pump 320 and the outlet 322 of the pump. This second flow path allow a small amount of air flow (with lower flowrate than the flow generated by the pump 320 from the inlet 321 to the outlet 322) to occur from outlet 322 to the input 321. Such a leakage improves the control stability of the fluidic system as by allowing a negative flow to occur. It also allows to decrease the pressure at the outlet 322 if required.

The configuration of **figure 3C** represents an active valve 340. Such valve may be proportional (e.g., a variable orifice depending on a drive signal) or bimodal (on/off which may be opened or closed depending on a drive signal). In this configuration, the inlet 341 is supplied with positive or vacuum pressure generated by an external device (not shown in the figure) such as a pump, gas reservoir or a compressor. Active valve 340 is regulated to achieve desired pressure (and flowrate). This representation is the most commonly used in actual pneumatic systems. Such set-up could use additional components between the external device (e.g., a pump) and the valve 340, for example before the system inlet 341, to smoothen induced variations such as a tank or passive pressure regulator.

Fluidic system modelling

The controlling method may exploit a model for different physical phenomena in the fluidic system and take into account physical equations (e.g., gas equations) which govern pressure or flowrate and/or technological limitations of the actuators and sensors. By exploiting of a model by the method is meant that the controlling method may choose one or more parameters in computing the actuator command (e.g., in the computation of the gain, the first correction factor, and/or the second correction factor) in accordance with the model. In such models, gas is considered ideal and flow over the fluidic system is considered to be subsonic.

The method may further simplify the physical equations by approximative assumptions to facilitate their application in the controlling method and/or because in practice not all physical parameters in said equation may easily or without a considerable cost be measured in real time (such as gas temperature, gas volumetric mass, and/or drain profile). Such approximative assumptions in the modelling do not induce a major impact on overall modelling and system behavior. Moreover, most control methods use filtering reducing at a certain point model error and also for smoothening control or removing noise from sensor measurements. In examples, the method may split the physical components of the fluidic system with no or few interactions together. In other words, the method may take into account a physical model of each component of the system independently. Thereby, the physical phenomena are divided into simpler equations, and the overall complexity is split into smaller parts before merging them again as a global result.

Examples of modelling of pressurization (e.g., of a reservoir) by the fluidic system are now discussed.

In examples, air (which flows in the fluidic system) is described by the ideal gas law *PV = nRT.* Further, the Saint-Venant equation gives the relationship:

$$Q = Kv\sqrt{\Delta P}$$

where Q is flow rate at a particular component (e.g., a flow resistance), $\Delta P$ is pressure drop of the flow passing said component, and *Kv* is discharge coefficient. The discharge coefficient for each component may be determined experimentally and may be dependent on properties of the component, for example on the surface area of an orifice (which may represent a valve), or the workload delivered by a pump. The working regime of a pump depends on the workload connected to the pump.

The two equations, i.e., the ideal gas law, and the Saint-Venant equations may be enough to determine the dynamics of the pressure in a reservoir. For example, assuming isothermal conditions in the reservoir, the following equation of a time evolution of pressure may be obtained

$$\frac{dP}{dt} = \frac{dn}{dt}\frac{RT}{V}.$$

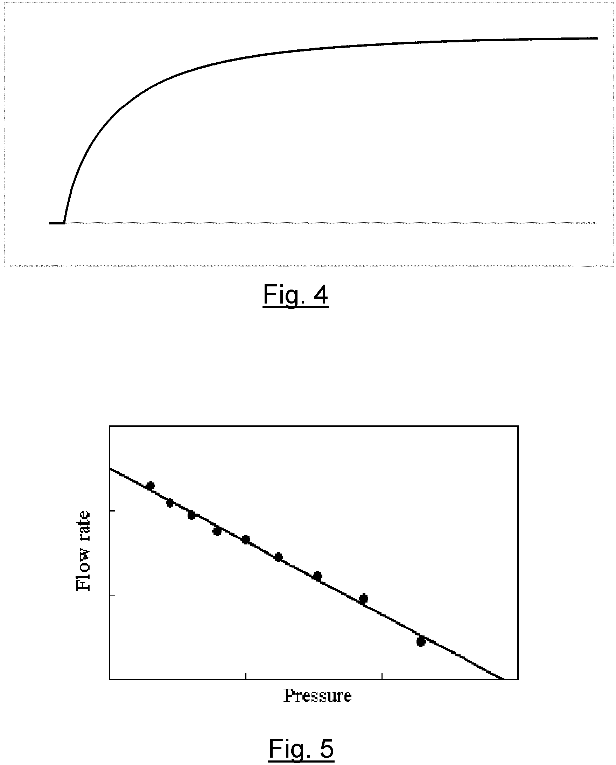

A graphical representation of pressure evolution in a reservoir during pressurization is displayed in **figure 4.** Furthermore, **figure 5** presents a relationship between maximal achievable pressure and flowrate of a pump.

The depressurization of (e.g., of a reservoir) by the fluidic system are similar to pressurization examples as discussed above.

Examples of modelling of proportional valves are now discussed.

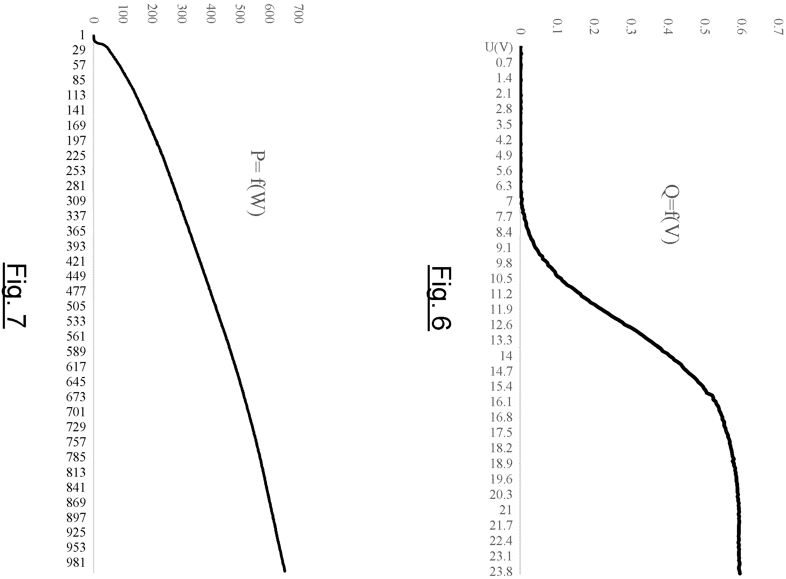

In examples, proportional valves may be used as active part (as the active valve 340 in **figure 3C** discussed above) for regulating pressure by the controlling method. In such examples, the method may adjust a valve opening orifice depending on drive power. The discharge coefficient $Kv$ (as discussed above) of the valve allows adjusting flowrate through the valve. The trace displayed in **figure** 6 shows air flowrate through an exemplary valve depending on driving voltage.

Exploiting proportional valves has some drawbacks such as hysteresis effect, uncertain opening voltage (especially between different valves even of same type), non-linearity, and potential influence of temperature and humidity. This requires experimental modulization (i.e., modeling of each valve based on experiments).

In examples, the method may control the proportional valves by a driving voltage. In examples where the proportional valve is an electro valve, the method may control the valve with an electric current drive as the magnetic field of the coil (of said electro valve) is proportional to the current.

Examples of modelling of air pumps are now discussed.

The method may model an air pump behavior similar to a proportional valve in which an equivalent discharge coefficient $Kv$ of an air pump is linked to used power. **Figure 7** presents an example of generated pressure versus pump drive power which is almost linear. The controlling method may drive by controlling pump voltage, current, power and/or frequency, depending on the technology.

In examples, the controlling method may use feedback from a tachometer (included in the control apparatus) attached to a pump (e.g., a rotary pump) for computing the drive command.

Examples of modelling of water hammer phenomenon are now discussed.

As known per se, the water hammer phenomenon is an unwanted phenomenon that may appear in closed circuits when conditions in the circuit change rapidly. More specifically, when conditions of gas in the fluidic system change from a flow at a certain velocity (i.e., a dynamic condition) to a static condition, kinetical energy of the gas is dissipated through the system and translates to oscillations, i.e., a wave traveling back and forth along the system. In examples, using on/off valves may introduce a water hammer effect.

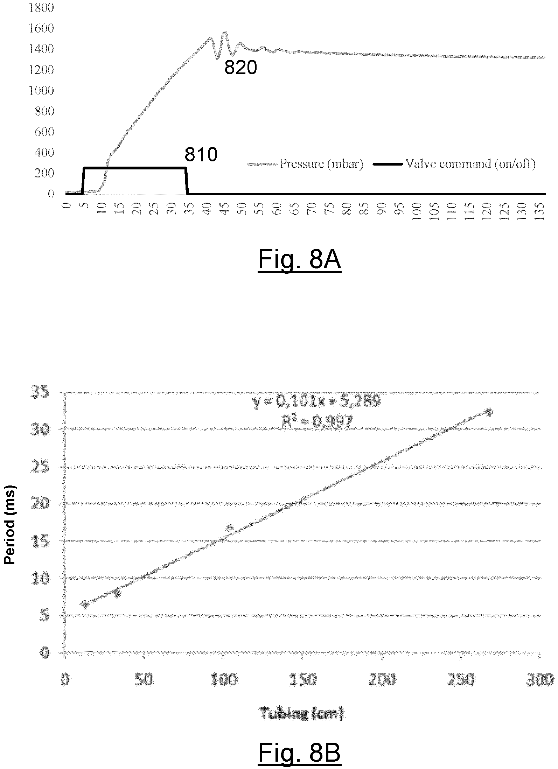

**Figure 8A** presents an example of water hammer effect during the pressurization, where upon the off command 810 of an on/off valve oscillations 820 form.

**Figure 8B** presents a relation between total length air path and a period of induced water hammer wave according to the formula:

$$f = \frac{4l}{c}.$$

As it can be seen from **figure 8B** such a relation may be approximated by a linear relation.

Examples of modelling of pressure flight time are now discussed.

A generated pressure pulse at a fluidic system may propagate throughout the system with a delay. Thereby, the measurements by sensors are delayed. The delay may be linked to tubing length and geometry of air paths in the system. Additionally, or alternatively, the sensors may introduce a measurement delay due to their internal acquisition time, sampling and filtering effect.

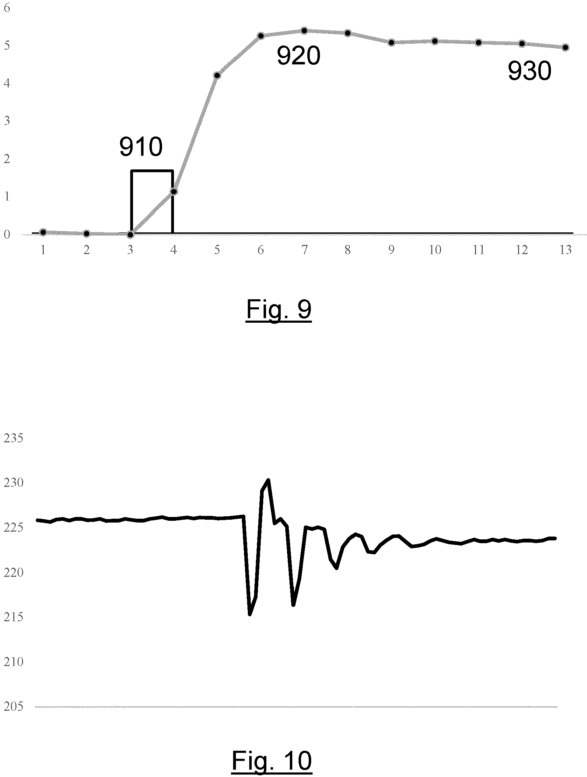

**Figure 9** shows pressure profile over time (ms) a short pressure pulse (or burst) 910 of duration of 1ms. Followed up by sensor measurement inside of a closed reservoir, at subsequent time, around 4ms after pressure reaches its peak value 920 around 5mbar. After the pressure reaches its peak value 920 decreases slightly during several milliseconds before stabilization 930.

Examples of modelling of thermal relaxation are now discussed.

As discussed above, the method may model gas as an ideal gas. According to the ideal gas law, changes in pressure of gas in a reservoir result in changes in gas temperature, thereby inducing thermal effects. Said thermal effects occurring after a pressure change may last for several seconds until the temperature reaches an equilibrium with the external environment, e.g., the atmosphere. From $PV = nRT$ statement, the following equation describes this phenomenon for a fixed reservoir size, between two states 1 and 2 and their respective pressure and temperature :

$$\frac{P2}{P1} = \frac{T2}{T1}.$$

and a final pressure (thus an amplitude of the thermal relaxation) can be predicted using the following equation:

$$P(t) = P0\left(1 + \frac{1}{n0}\int_0^{t1} Q\, dt\right)$$

where Q is the air flow rate, $P0$ is the supplied pressure and $n0$ is a gas constant (i.e., mol per volume at $P0$ pressure).

As a reservoir is pressurized, the internal gas temperature increases. After a small amount of time, the gas temperature reaches equilibrium with the environment by thermal dissipation. This leads to a decrease in pressure inside the reservoir.

Examples of modelling of dual reservoirs are now discussed.

By "dual reservoir" is meant a combination of a first reservoir formed by the control apparatus (e.g., internal volume and the volume of tubing) and a second reservoir which is the reservoir in which the control apparatus seeks to control the pressure (e.g., pressurize and/or depressurize). The volume of the first reservoir is directly related to the pressure flight time phenomenon which is explained above as the gas needs some time to flow through all fluidic components and reach the final reservoir. As discussed above, in this phenomenon, when a short burst of air is generated, there is a delay of propagation between the two reservoirs (i.e., the first one which is considered the actuator and tubing, and the second one where the measurement is done in the pressurized reservoir).

In some examples, and for pressurizing a reservoir, the control apparatus may comprise a pressure transducer placed inside the reservoir. On the other hand, and due to integration limitations, pressure sensors (included in the control apparatus) may be placed near an outlet of the system (which is connected to the reservoir), for example after the actuator(s). Thereby there is a delay from when the pressure at system outlet reaches the reservoir. This phenomenon is amplified by air flowrate, and results in an overestimation of the pressure when pressurizing or and underestimation of pressure when depressurizing.

Such delays are not an issue for controlling a flow rate, for example for an open reservoir.

Examples of modelling of pressure transducers noise are now discussed.

As known per se, pressure transducers technology is similar to the microphone, i.e., a presser transducer transforms air pressure variations into electrical signal. In case of high-pressure dynamics or when using an on/off valve, a sound wave noise is generated. In addition to this noise, mechanical bouncing of the valves may be registered by the pressure transducer as a noise and bias the measurement. **Figure 10** shows an example of such noises generated by an on/off valve switch captured by a pressure transducer at high acquisition rate (over 1kHz)

Control algorithm

Embodiments of control algorithms according to which the controlling method computes the actuator command are now discussed. The control algorithm is an algorithm based on which the controlling method works. Further, and as discussed above, the controlling method may control the fluidic system in cooperation with a control apparatus.

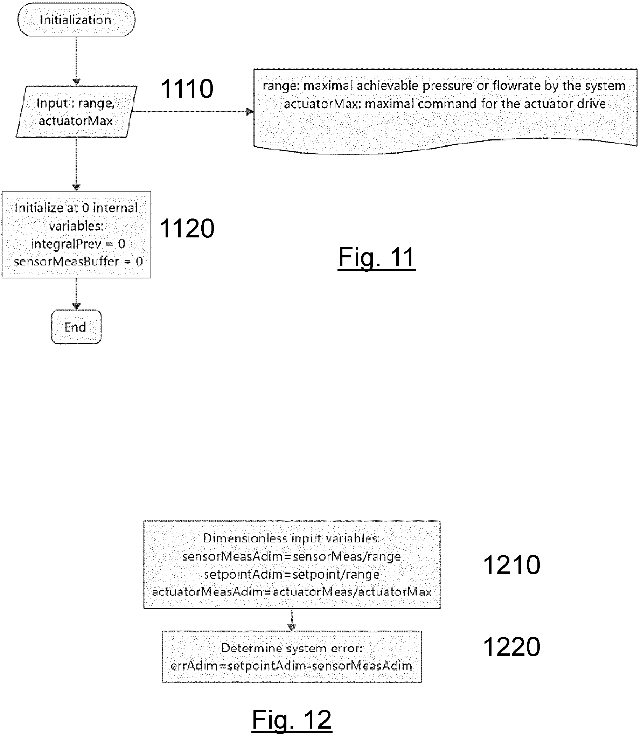

In some examples, the algorithm may have an initialization step prior to providing the plurality of measurements. In such examples, the controlling method comprises providing a range of values for the pressure. In particular, the providing of the ranges may comprise providing a pressure range and a flowrate range. Such an initialization step improves the method by adapting the controlling method for a wide variety of pressures and flow rates. In examples, and in reference to **figure** 11, the control algorithm is initialized with pressure or flowrate ranges 1110 that the fluidic system may output. Flowrate in the fluidic system may be determined by the flow restriction in the fluidic path between inlet and outlet of the system. The algorithm is to be thus able to deduce dynamic of the system according to said ranges. Said ranges define available working bounds of the system, i.e., the system cannot achieve higher pressure or flowrate.

In examples where the fluidic system comprises a pump, the pressure range may be defined by a maximal achievable pressure by the pump in a closed system (and the atmospheric pressure, for example), and the flowrate range may be defined by a maximal achievable flowrate by the pump (and no flowrate, for example) in an open system (i.e., without reservoir).

In examples where the fluidic system is fluidically connected to an external pressure source, the pressure range may be defined by an inlet pressure (i.e., the pressure of the external source), and the flowrate range may be defined by a flowrate at a system outlet in an open system.

In examples, the control algorithm is initialized with the maximal pressure or flow rate in respective ranges depending on the working mode, i.e., pressure regulation or flow regulation. As the control algorithm may involve gas equations based on pressure differential or gas flow (as discussed above), the initialization parameters are important factors for determining actuator(s) drive signal (i.e., the actuator command). A control algorithm provided with more realistic initialized parameters concerning the working regime of the fluidic system show better control stability and response rate.

Alternatively or additionally, the control algorithm may accept as input 1310 an actuator drive range which determines a maximal value possible to be applied by the controlling method to an actuator. The drive range depends on the type of the actuator and may be defined in terms of voltage (V), electric current (A), or power (W).

In examples, at step 1320, the initialization may further initialize some parameters in the algorithm (e.g., an initial value for an integral controller, and/or a history of stored measurements) for the subsequent steps as discussed below.

Multiple components can be used (passive and/or active valve, pump) in the same set-up. Commonly, two actuators (for instance a pump and a valve) can be coupled together in a configuration such as one used for pressurization and represented in **figures 3A-3C,** and the other for depressurization. For best practice and similar behavior (response time and flow profile), the characteristics of the two actuators might match each other. In examples, such characteristics may be the flowrate and the pressure characteristics generated by a pump or through an aperture of a valve. Flow

$$Kv = \frac{\sqrt{\Delta P}}{Q}$$

resistance through a component in the fluidic system, for example, an orifice or a valve can be expressed by . Ideally, the flow resistance through the valve should match the source flowrate and pressure imposed by the pump. A decent variation is managed by the algorithm but for better results such as same pressurization and depressurization time, it is more suited to match actuators' performances.

In examples, the algorithm may comprise rescaling the provided pressure measurements and/or the provided pressure setpoint. The algorithm may perform such a rescaling by normalizing any of the provided measurements and/or the provided setpoint with respect to the provided ranges. The algorithm may use rescaled, i.e., normalized, values for the measurements, the actuator commands, and/or the setpoint. Using rescaled values improve the adaptation capacity of the algorithm to accommodate for different pressure and flowrate ranges. In such examples, the internal working variables of the algorithm (e.g., variables relating to the sensor(s) and actuator(s)) are dimensionless and scaled according to their respective working ranges. This allows the algorithm to always operate from 0% to 100% of the range regardless of the actual (i.e., unscaled) ranges and units of the variables relating to the sensors or actuators.

As shown in the example of reservoir pressurization above (e.g., **figure 4**) the pressure over time is always the same pattern regardless of the pressure range. This is because of the fact that the operating mode is allowed by the relation between pressure and flow variations according to the equation $\dfrac{dP}{dt} = \dfrac{dn}{dt}\dfrac{RT}{V}$ which shows the link between pressure and flow variations.

An example of such rescaling is presented in **figure 12** where, at step 1210, the measurements by the sensor (sensorMeas), setpoints (setpoint), and actuator commands (actuatorMeas) are scaled to their range (range) to provide respective dimensionless values (i.e., sensorMeasAdim, setpointAdim, and actuatorAdim, respectively). Furthermore, a system error, i.e., a deviation (i.e., difference) between the setpoint and a sensor measurement (errAdim) may be computed, at step 1220, based on scaled values. The system error may be vector, where each element of the vector comprises a deviation between each measurement and the setpoint (e.g., thereby providing a history of deviation for past measurements when the plurality of measurements forms a pressure history of the fluidic system as discussed above). The actuator command may be scaled up (i.e., with dimension) before driving the actuator after computing the command.

In examples, the providing of the plurality of measurements from the pressure sensor has a first refresh rate (or acquisition rate). In other words, the control apparatus may receive the plurality of measurements from the pressure sensor at the first refresh rate. The first refresh rate may depend on an acquisition rate of the pressure sensor.

The algorithm may also have a second refresh rate (or running frequency), for the computing of an actuator command. In other words, the computing of a predictive model, the computing of a deviation, the computing of a gain, the computing of a first correction factor, the computing of the second correction factor, and the computing of an actuator command may have a second refresh rate. The running frequency may depend on a "computation rate" according to computational resources in the control apparatus (e.g., CPU, and/or memory). Alternatively or additionally, the running frequency may depend on the sensors(s) acquisition rate and/or the activator(s) response rate.

Similarly, the applying of the computed actuator command (by the controlling method) to the fluidic system via one or more actuators has a third refresh rate or frequency. The third refresh rate may depend on or correspond to a response rate of the one or more actuators.

Each of the first, second, and third refresh rate defines a "resolution" (i.e., timing preciseness) for the measurements and command application.

Sensor(s) and actuator(s) resolution, i.e., the sensors' acquisition rate and the actuators' response time, is a key point and is directly linked to system performances and impact how precise the algorithm can control the system. It is key to match the acquisition rate of the sensor with the actuator capability to react to a change. Too high or too low acquisition rate compared to the response rate leads to instabilities and low response time, respectively. When the actuators are slower (i.e., lower response rate then acquisition rate), a delay and a distortion between the command and the actual impact on the system may be introduced. In examples, the sensor acquisition rate and actuator response rate (e.g., of any sensor and any actuator in the control apparatus) may be of the same order of magnitude.

As discussed above, the first refresh rate may depend on an acquisition rate of the pressure sensor.

In examples, the computation rate is higher than the response rate and/or the acquisition rate. This improves the controlling method by smoothing the computed command, prevents rounding values (leading to small oscillations between two values) and better integrates noise (leading to better stability). In such examples, all measures and commands may be on 32-bit floating-point resolution.

In examples, the running frequency of the algorithm depends on the acquisition time of the sensor(s) and reactivity of the actuator(s). In particular, the algorithm may match the refresh rate of the sensor(s) with the actuator capability to react to changes, as a too high or too low refresh rate (i.e., the third refresh rate) leads to instabilities and a low response time, respectively. In particularly efficient examples, the algorithm may be executed at the nominal refresh rate of the sensor(s), ideally between 0.5ms and 5ms or more preferably approximately 1ms. This rate allows gas to spread across the system and reach an equilibrium point. Ideally, and as discussed above, the algorithm is processing higher resolutions calculations than sensor acquisition chain or electronic drive for the actuator. This smoothens the command, prevents rounding values (leading to small oscillations between two values) and better integrates noise (leading to better stability). For example, the algorithm may use 32 bit calculation resolution even if the sensor resolution is only 16 bit.

Additionally, running the algorithm at a high refresh rate reduces the impact of signal noise and so improves system stability. The algorithm naturally filters sensor measurements by the linear regression model This also benefits to system resilience against sensor noise, limiting actuator corrections from surrounding disturbances.

In examples, the actuators are driven by the control apparatus as precisely as possible (i.e., with the third rate as high as possible) in order to achieve best response and stability. Higher refresh rates on the applied command (i.e., the third refresh rates higher than the actuator(s) response rate) leads to no change on the pneumatic system; however, the algorithm may drive the actuators faster than their response rates as this allows getting best results out of the actuators. The actuator response times may vary from 1ms to 10ms. Additionally, resolution between sensor acquisition and actuator drive is better to be around same magnitude . In particular examples, the third refresh rate is larger than the first refresh rate, and the second refresh rate is larger than each of the first and the third refresh rate.

In examples, the controlling method may further comprise an adaption process comprising updating one or more of the provided ranges at the initialization step. For example, after the initialization step, and during the use of the algorithm, the pressure or flowrate range of the system may evolve. This may occur when using an external pressure source. In examples, the algorithm may accept as input a new range of the system to adapt the algorithm to the new range without degrading performances and without a need for predefining different settings for different ranges. This improves the algorithm to match optimally with achievable values, in particular when there is a significant deviation from the initialization condition.

In examples, and during a such a range update step, the algorithm may scale internal parameters accordingly to allow a smooth transition. In examples, the algorithm may measure maximal achievable pressure by using a pressure transducer at a system inlet. This sensor measurement can be directly fed to the algorithm, providing real time evolution of system capabilities. The algorithm may compute such an adaptation at the same rate as the computation rate or the acquisition rate of the sensor as discussed above.

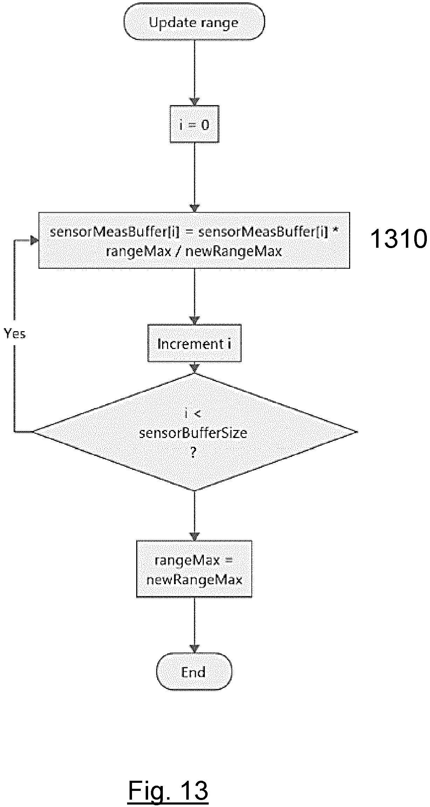

An example of range update is presented in **figure** 13. In this example, at step 1310, any previous measurement (sensorMeasBuffer) is rescaled from a previous range (rangeMax) scale to a new range (newRangeMax) scale.

In examples, the algorithm computes a predictive model using at least a part of the measurements, for example using a time history of measurements of the pressure. The predictive model be a linear regression model or a nonlinear regression model (e.g., a quadratic model). The linear regression models show better performance in filtering sensor noise, smoothening actuator commands, and/or predicting fluidic system trends from past behavior. Alternatively or additionally, the algorithm may use the linear regression model to allow the system to adapt to different reservoir size by analyzing the trend of the pressure measurement as pressure variation is directly linked to reservoir volume. Such prediction furthermore helps to predict and control the oscillation imposed by the water hammer phenomenon as discussed above.

In examples, the algorithm may use a linear regression model to describe a relationship between two variables, for example a temporal behavior of a variable (e.g., pressure). As known per se, such a description is realized by obtaining a linear model, i.e., equation, relating the two variables. In other words, the equation has the form $Y = aX + b$, where $Y$

is a measured sensor value and $X$ is the time of acquisition. Furthermore, $a$ is the slope of the line and $b$ is the offset from 0, obtained by the following equation:

$$a = \frac{(\sum y)(\sum x^2) - (\sum x)(\sum xy)}{n(\sum x^2) - (\sum x)^2}$$

$$b = \frac{n(\sum xy) - (\sum x)(\sum y)}{n(\sum x^2) - (\sum x)^2}$$

where n is the number of variables (and time instants) and $\Sigma$ is the summation.

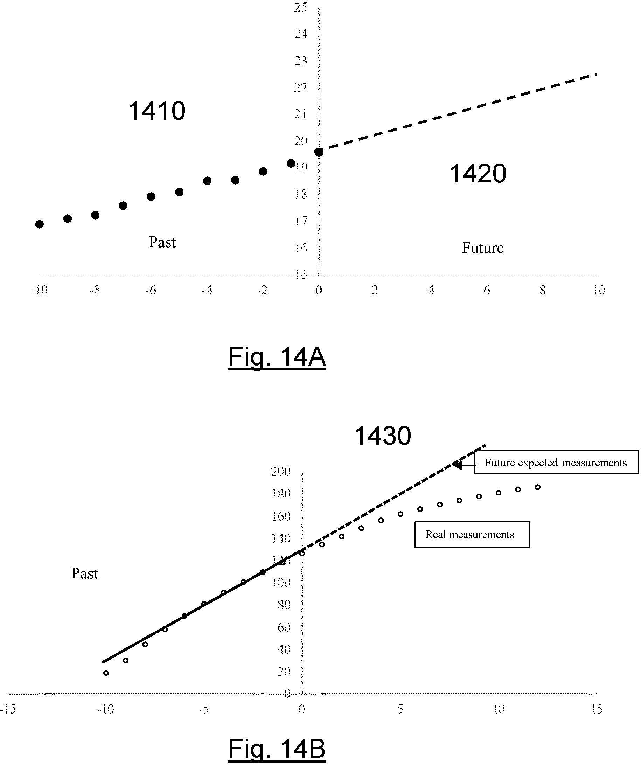

In examples, the algorithm may store and interpret past sensor measurement values are stored to obtain the slope of curve. Once the trend is obtained (i.e., $a$ and $b$ as discussed above), the algorithm may predict future measurements using the linear regression. An example of such predictions is presented in figures 14A-B where the current time is set to zero in the x-axis and the future pressure values 1420 are computed using the linear regression 1430 (which is computed based on past values 1410).

This allows the anticipation of future actuator commands and more especially for the anticipation of overshoots/undershoots. Such an anticipation allows the algorithm to prematurely control the actuator to have a smooth entry in in the area of interest, i.e., when the measurements are close to the respective setpoint. The algorithm may prematurely slow down the actuator(s) near setpoint thereby allowing a smooth entry in the area of interest. Amount of slow down is proportional to future estimated error (i.e., the deviation based on the predictive model). Greater the gap between actual measure and predicted error leads to greater correction on actuator command, preventing future exceeding of the setpoint. In other terms, future estimated system error (difference between setpoint and measure) is considered instead of actual system error for actuator command.

In practice, the pressure curve (i.e., the pressure behavior over time) may be not linear, thus the linear regression does not perfectly match with sensor future values, especially when pressure variations are low. An example of such a deviation between the linear regression model and real sensor measurements is presented in **figure 14B.** In such examples, errors due to linearization are not a big concern as the linear regression model overestimates future values. This result in a slower response time near the area of interest, however, the algorithm is able to compensate for the error over time. Such an overestimation is easier to manage than an underestimation which leads to overshoot. In practical conditions, thermodynamic phenomena may also induce errors in sensor value estimation. Furthermore, using a linear model is advantageous compared to nonlinear ones as fitting a best nonlinear curve may increase sensor noise and lead to increase of uncertainty especially in low pressure variations.

Using the linear regression as discussed above may filter noise (e.g., sensor noise) and allow smooth actuator response. Unlike other filtering methods (low pass filter for example), linear regression does not introduce a significant delay in system response.

In examples, the linear regression is computed over past sensor measurements, defined by a window size, i.e., a part of (for example stored) past data. The algorithm may process a measurement buffer and return the slope and offset of past data, i.e., compute the linear regression equation.

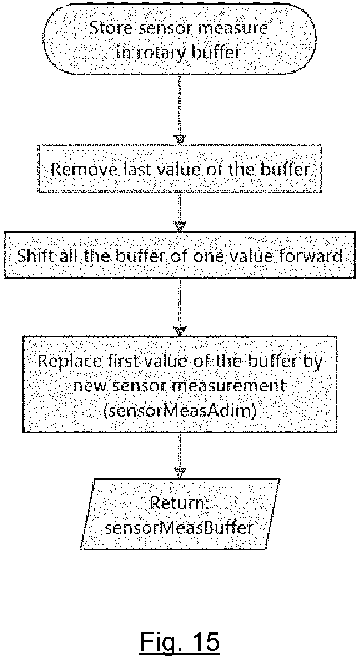

Data is contained in a rotary buffer where the newest value is at the first position and the oldest value is at the last position as presented in **figure** 15. The algorithm may set the size of this window (i.e., the number of data points stored) to a value which is not too low such that the system become sensitive to noise and slope is not accurately estimated, and not too high such that the system needs a significant time to adapt to new changes. In examples, the window size may be between 10 and 100, and more preferably about 50.

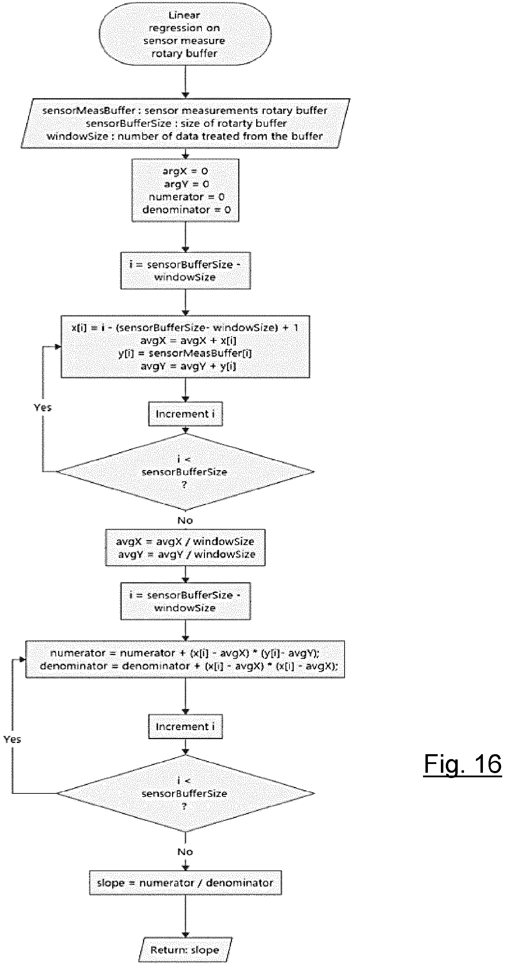

An example of computing the linear regression is presented in **figure 16**.

As discussed above, the algorithm may compute a deviation (i.e., errAdim). The deviation may be further based on the linear regression model. More specifically, the linear regression is defined by a slope, and in some examples the computing of a deviation is based on the slope. In such examples, the slope is then used accordingly to compensate for the deviation (i.e., error). In examples, the algorithm may compute the deviation by computing a difference between a value of the provided measurements and a value of the setpoint; and modifying the difference by a term dependent on the slope, preferably with a polynomial dependency (for example of order 1, 2 or 3). The algorithm may consider such a slope-dependent term to take into account that the measured error may be biased and to compensate for future anticipation. For example, the slope may be multiplied by a certain value, the so-called anticipation factor AF, then subtracted from the system error:

$$errAdim \; = \; errAdim - (slope * AF)$$

This anticipation factor may depend on multiple factors: thermal relaxation, pressure flight time, time required by the pressure to establish in the reservoir, and/or actuator response time. The anticipation factor compensates for physical phenomena and system set-up configuration and may change from one system to another. The anticipation factor may be set by the algorithm and/or based on experimentation. In examples, the factor may be in the range of 10 to 200, such as for example approximately 80. A too low value reduces algorithm anticipation capability, while a too high value results in a smoother but slower response by the algorithm.

In examples, linear regression slope and anticipation factor are used to alter the error (difference between the setpoint and sensor measure). Linear regression shows future the trend and estimates future error while anticipation factor is the weight of this anticipation. This altered error is used afterwards for next computations, this is one of key values.

In examples, the system error may be correlated to a linear, quadratic or cubic multiplier on the error, for example:

$$errAdim \; = \; errAdim - (slope * AF * (1 - errAdim)^3)$$

Such a system error results in faster response when the state of the system is far from the setpoint. Such quadratic or cubic multipliers may not be applied when the system state is near the setpoint.

More generally, the system error may be computed by a polynomial equation, wherein slope * AF is a factor in the polynomial equation.

In examples, the algorithm may compute a gain based on the value of the setpoint and/or on the value of a respective measurement. The gain may be used to establish a relation between the error and the command applied to the actuator.

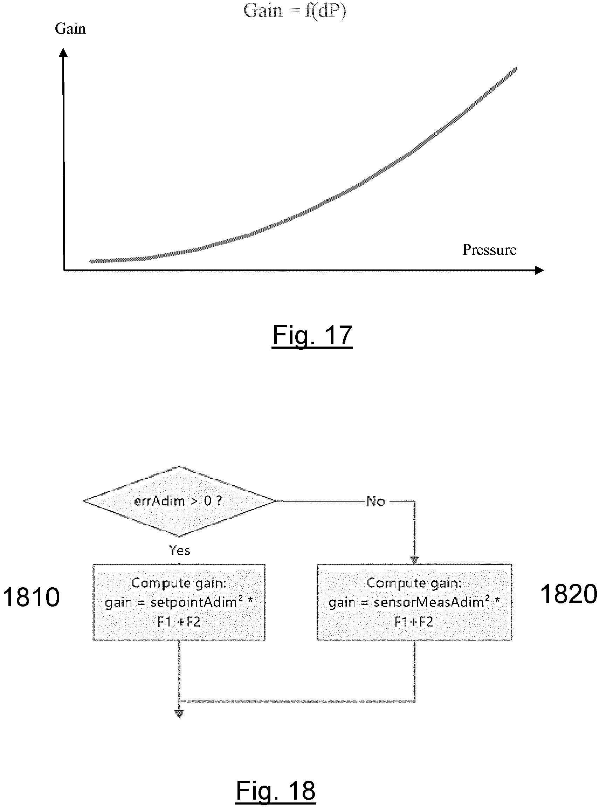

In the prior art, proportional, integral and derivate factors of a PID controller are manually determined and entered as system parameters. These factors vary for each system and cannot handle changes of conditions for a system. In examples, the algorithm may determine a dynamic gain or adaptative gain for optimum performances. The aim of the adaptative gain is to match actuator capabilities in order to maintain a constant pressure or flow differential over all working regimes. An example of a dynamic gain is presented in **figure 17** which displays the evolution of the gain depending on applied pressure. A similar curve profile is valid for flow control since they are linked by Poiseuille equation Q = $S * \Delta P$ where S is a characteristic of the actuator. According to **figure 17,** at low pressure (or flow), small actuator steps may generate high increments, while at high pressure (or flow), i.e., near maximum capability from a pump or for a compressor and a valve, big actuator steps may generate small changes in pressure or flowrate. In examples, the algorithm may set the dynamic gain so as to normalize the actuator correction factor through all pressure or flow range. This method also benefits of not requiring specific parameters or to be adapted depending on system working pressure or flowrate.

Pressure and flow behavior are governed by complex fluid mechanics laws, some of them evoked and considered above. Resolving the dynamic relationship linking pressure, flowrate with gas properties commonly refers to Navier-Stocks equations. As a simplification of the method, equation is determined experimentally from actual measurements. Gain curve in **figure 17** is the result of actuator characterization exposed in **figure 5**. This is achieved by inverting a trendline linking measured pressure (or flowrate) and applied command.

In examples, the gain may be related to the value of the setpoint, for example by an equation or a physical modelling of the fluid system based on the setpoint. In particular examples, the gain may be computed by a quadratic expression.

In order to match the target setpoint of the algorithm, the gain may for example be computed as follows:

$$gain \; = \; setpointAdim^2 * F1 + F2$$

where the factor F2 may have for example a value between 0.01 et 0.02 and preferably around 0.01, and the factor F1 may have for example a value between 0.35 et 0.45 and preferably around 0.4. As working values are dimensionless gain can also be expressed as the relationship between the impact on the system and actuator command change. In other terms, for instance a 1% of pressure or flow change (or error) will result on maximum allowed command change of 1%.

In examples, the resulting gain may not be less than 1% (which results in too small actuator steps) and may not exceed 50% (which may lead to up to 50% of actuator command change in one step). More preferably, the resulting gain may be between 10% and 40%. The maximal gain value may depend also on the actuator response time. In other words, for fast systems, the gain may be higher as the actuator is able to output a better response. In examples where the actuator response to a command change is slow, a lower gain may avoid overshoots/undershoots.

Finally, the system may generate some small overshoots/undershoots while in ideal conditions this is an unwanted behavior. As described in physical considerations: pressure flight time (figure 9 - 920), dual reservoir modulization **(figure 8A)** and thermal relaxation (figure 9 - 930), those physical phenomena induce a difference between sensor measurement and real gas pressure/flow. After a pressure or flow change, gas requires some time in order to reach equilibrium conditions.

In examples, the algorithm may distinguish between cases in which pressure or flowrate needs to increase and cases in which pressure or flowrate needs to decrease. In other words, the algorithm may distinguish distinct flow profile if the actuator is pressurizing or depressurizing the fluidic system. Yet in other words, the algorithm may support an "asymmetric command".

In examples of such asymmetric commands, for a pump, the increase in power command is more significant for pressure or flow increase, while the decrease in power command is slower as the impact on the system is less significant. This is linked to the design of the pump and especially true for check-valve based devices.

Asymmetric control determines more accurate actuator command to use depending on actuator characteristic. In examples, asymmetric control may establish a stable working regime at low actuator command by favoring larger decrements than increments. This tends to favor lower gas and power consumption of the device. In other terms device will tend to find lowest working regime while keeping requested setpoint.

In examples, the asymmetry control may be implemented on the estimated gain and may depend on the sign of the error (i.e., if errAdim is positive or not). An example of such implementations is presented in **figure 18** in case of a pump control. In the exemplary implementation, when the actuator command has to be increased (i.e., 1810), the gain computation is based on the setpoint to reach and when actuator command has to be decreased (i.e., 1820), the gain computation is based on actual measurement which will decrease over time.

In particular, the computed gain may be quadratically related to the value of the setpoint when the value of measurement is less than the setpoint; and the computed gain may be quadratically related to the value of measurement when the value of measurement is above the setpoint.

In examples, the algorithm may compute a first correction factor, also called a proportional corrector, based on the computed deviation and the computed gain as discussed above. The algorithm may use such a corrector when the error is significant, and the system needs a fast reaction. In order to accelerate the proportional response and minimize its influence near the setpoint, the computing of the first correction factor may comprise a multiplication of the square of the computed deviation by the computed gain. For example, the algorithm may use a square of the error as the following:

$$proportionalCorrector = errAdim^2 * gain * F$$

where a value of the multiplier F may be between 50 and 200, preferably around 100. The value of the multiplier may depend on the actuator response capability. The higher actuator responsiveness, a higher F factor can be used.

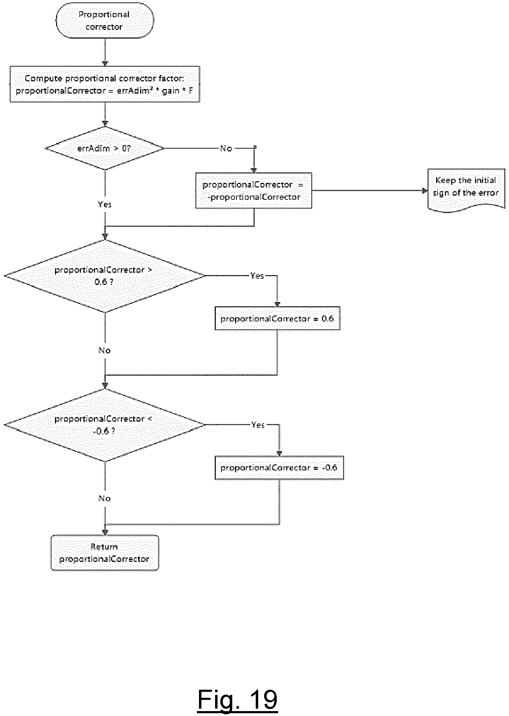

In such examples the result is always positive, as the error is squared. However, the algorithm may apply the error sign (as discussed above) as presented in **figure 19**.

In examples, the algorithm may avoid too high variations due to quadratic implementation discussed above by setting that a proportional corrector may not change actuator command by more than a maximum amount, such as for example +/-60%, at once. An implementation of such examples is presented in **figure 19**. This is also commonly known as windup.

In examples, the algorithm may compute a second correction factor, which can also be called an integral corrector, based on the computed deviation, the computed gain and a previous value of the second correction factor. The second correction factor responsible for bringing and maintaining the actuator at the correct command and for the stability of the system during steady regulation. Similarly to the proportional corrector discussed above, the algorithm may compute the integral corrector based on the system error and gain as the following equation:

$$integralCorrector = integralPrev + gain * errAdim$$

where integralPrev is a previous value computed for the integration corrector. In some examples, the algorithm may set integralPrev to a measurement from an actuator.

The algorithm may use a windup so that the integral corrector remains within a preset range, such as from 0 to 100%. This avoids too large steps in the integral which may lead to excessive overshoots. This implementation is also known as windup.

In examples, the computing of the second correction factor comprises applying a low pass filter to the second corrector factor, the low pass filter being based on the previous value of the second correction factor. In other words, the algorithm may additionally apply a low pass filter to the integral corrector in order to smoothen small adjustments, for example such as the following:

$$integralCorrector = \frac{integralCorrector + integralPrev * (gain - 0.01) * 5}{(gain - 0.01) * 5 + 1}$$

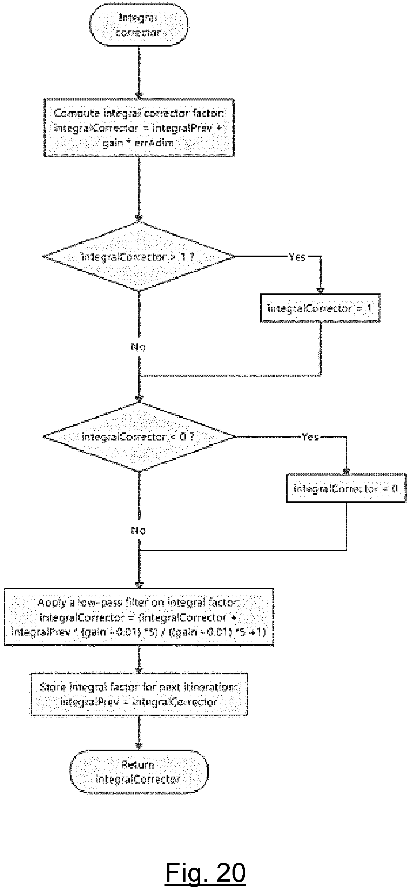

This filter is based on the system gain. If the gain is low (or when at low pressure or flowrate) then the filter comes in play. As small command variations generate large pressure/flowrate changes, the filter helps to smoothen the command. On the other hand, when the gain is high, there is lower need for filtering the command since the impact of a command increment on the pressure/flowrate is low. An implementation of applications of such a filter is presented in **figure 20**.

In examples, the algorithm computes an actuator command based on the first correction factor and the second correction factor. In other words, the final actuator command of the algorithm applied to the actuator(s) is the result of the proportional, integral and optionally the feedback from the actuator. In examples where there is no feedback from the actuator (i.e., there is no feedback measure from the drive circuit), the actuator command may be a summation of the first correction factor and the second correction factor, preferably upon a scaling, for example according to the following equation:

$$actuatorCommandAdim = proportionalCorrector + integralCorrector$$

Optionally, one or more further correction factors could also be computed and summed with the first and second correction factors. Alternatively and preferably, only the first and second correction factors are present.

In a closed loop configuration, the algorithm may consider the feedback from the actuator. This helps adjust the command according to the actual actuator state. As delay of the command, hysteresis and electronic drive variances are integrated in the feedback, the adjustment limits any unwanted effects.

In examples, actuator feedback may be directly injected as the previous integral value in this case and thus saved for next execution:

$$integralPrev = actuatorMeasAdim$$

Before returning the resulting command, the algorithm may check the range, thus limiting the output from 0 to the actuator maximal range. Optionally, depending on the actuator pressure/flowrate linearity, the algorithm may apply a linearization of the resulting command.

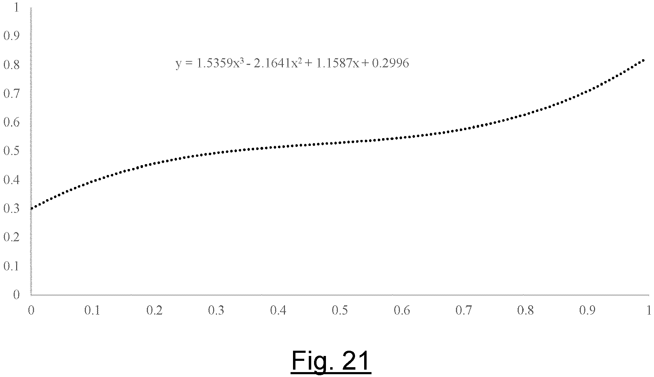

Actuator pressure and flow response to a command is not linear over all the range. This might depend on the actuator technology. As an example, in **figure 7** is the flow response of a proportional electro valve depending on applied voltage. Furthermore, and as already presented in **figure 6,** a valve actuator's response profile is not linear with respect to the voltage. The control method may replace such non-linearities by a normalized version which may be equivalently referred to as linearization even though the response is not linear. In examples, such a linearization (or normalization) may be achieved by reversing the curve and finding a polynomial fit as exposed in **figure 21**.

If there is an offset on the command (such for proportion valves having a threshold value) or if the system is irregular, the linearization step is even more relevant. Resulting equation is the relation between computed command by the algorithm and percentage of actuator command as if its behavior is linear.

Finally, the algorithm may convert the result value to a power, voltage or current control for the actuator. Additionally, the value is scaled up according to its range as

$$actuatorCommand = actuatorCommand * actuatorMax$$

where as discussed before actuatorMax is denotes the range of actuator command.

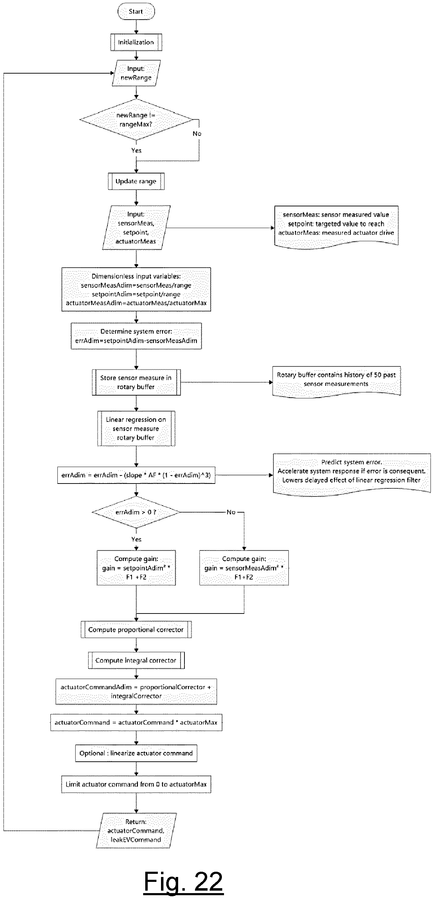

**Figure 22** represents algorithm flow diagram including all above steps and the order of execution.

Additionally, other known control methods from current state of the art could be used in junction or in addition to exposed algorithm. Such methods could rely on state machine, machine learning or fuzzy logic. This could enhance even more system performances in some case. For instance, a state machine logic could be used to always set actuator command to 100% if error is greater than a certain threshold. This acts like a bypass on the command and might compensate some latency that can occur in actual exposed method (due to linear regression).

EXAMPLES

The following examples illustrate the invention without limiting it.

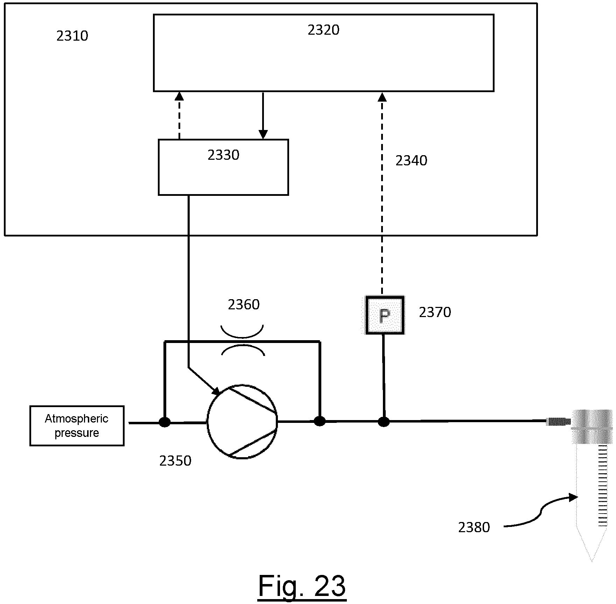

The setup of a fixed reservoir volume of **figure 2A,** as well as a pump with leak **figure 3B,** were used arranged as the set-up presented in **figure 23.** The experimental set-up was composed of one piezoelectric air pump 2350 capable of delivering up to 0.75 L/min and a maximal achievable pressure of 400 mbar. System inlet was atmospheric pressure. System outlet was connected to a plug or 15 mL or 50ml reservoir 2380 at its outlet through a tubing. The experimental set-up was also composed of a fixed leak component 2360 joining pump outlet and atmospheric pressure. Its main purpose was to provide a mean of depressurisation. Leak flowrate was 0.15L/min at 400mbar. A pressure transducer 2370 was mounted in the air flow path, at pump outlet in order to measure the pressure. A drive circuit 2310 set the pump power while measuring the pressure.

The details of the setup are provided in Table 1.

Table 1

| Description | Reference |
|---|---|
| Air pump | DP-S2-007 from TTP Ventus |
| Reservoir | 15ml and 50ml Ependorf + Fluigent pCAP + 4mm diameter tubbing |
| Pressure sensor | Honeywell ABP Series 1bar range analog |
| Driving circuit | TTP Ventus evaluation kit |

Example 1

Within the experiment protocol a fixed reservoir size of 15 ml was used. Total estimated enclosed volume (adding reservoir volume, dead volume and tubbing) was estimated to be around 20 ml. From a rest state (reservoir pressure is same as the atmosphere), a command of 150 mbar was set at 1s (A). This is around half of pressure range of the pump. Pressure and pump power command were logged over time.

In one case, a standard PID was used; the one provided with the evaluation board of the pump. The parameters were the default ones: 50 for Kp (which is the proportional corrector) and Ki (which is the integral corrector). A windup was also used in default configuration.

In the same conditions, the algorithm exposed within the field of this invention was used without any modification or parameter change.

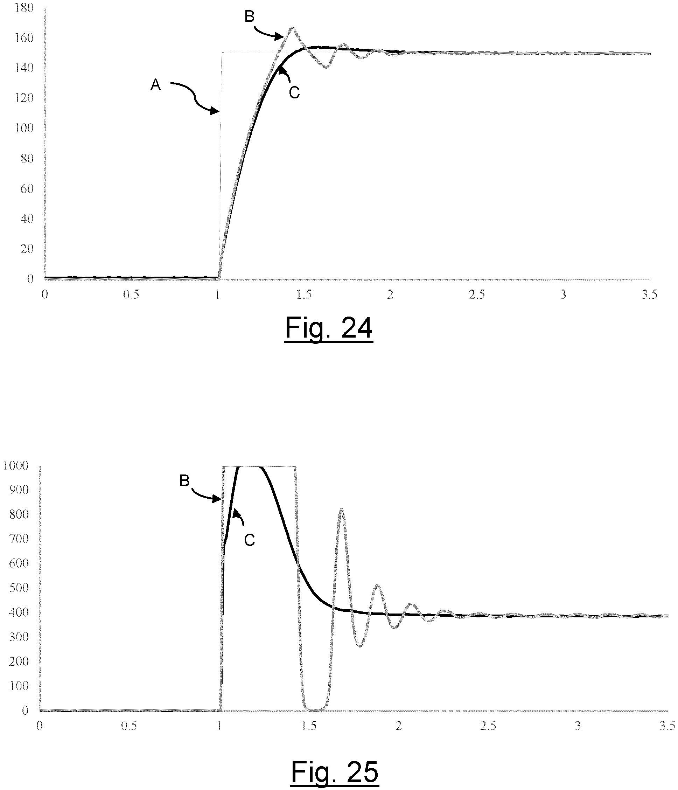

**Figure 24** shows the obtained pressure profile (mbar) over time (seconds). In the default configuration, the PID regulation (B) generated oscillations before stabilizing at setpoint. In the developed regulation (C), the pressure profile was smoother and there were no oscillations. A small overshoot was generated which is much intended in order to compensate for thermal relaxation during this transitory phase.

**Figure 25** shows the power command (mW) applied to pump actuator from the algorithms. The PID (B) regulation generated a sharp value change and oscillations when near constant working regime. In the developed regulation (C), the command profile was smooth and there were no oscillations.

In a first phase, the pump command rapidly increased since the system error was significant. As intended, before pressure reached the setpoint, the algorithm output command started to decrease, preventing unwanted overshoot. It started to anticipate that the setpoint will be reached soon. In the second phase there was a smooth transition where a stable working regime was searched. The algorithm continuously models the set-up and tries to find correct match. This leads to no oscillation and smooth approach. The output command also shows that there was no excess of power regardless of the pressure overshoot seen in **figure 24.** There was no need for reducing the output below the ending regime as it is the case for the PID. This demonstrates thermal relaxation phenomena occurring while pressurizing a fixed volume.

The overall system response time in order to reach the setpoint was also reduced as a result of the exposed improvements. However, when near the setpoint, the system dynamic was smoothened which might lead to a slightly increased amount of time required to find optimal command during this phase. Overall, this occurs only when near the setpoint and the additional time is negligeable.

Example 2

In this example, the adaptability capabilities of the algorithm to multiple setpoint order are exposed. A fixed reservoir size of 15 ml was used. The same experiment was performed three times but with different setpoints of 50 mbar (A), 150 mbar (B) and 266 mbar (C).

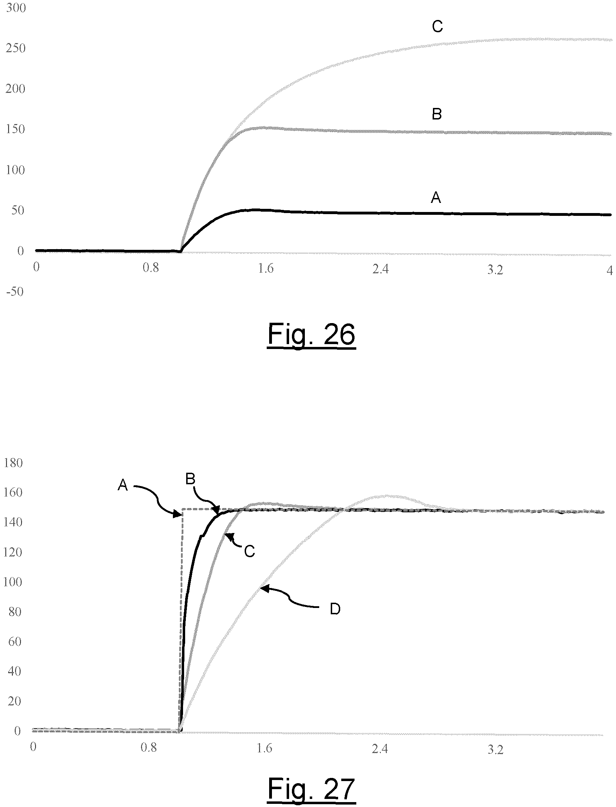

**Figure 26** shows the pressure profiles (mbar) over time (seconds) for each different setpoint. Regardless of pump pressurisation capabilities (flowrate and response time), the generated pressure profiles were all without oscillations and with minimal overshoot. The response time was also similar between these cases.
The adaptative gain method of the regulation allows to fit with pressure profiles.

Example 3

In this example, at rest state (i.e., when the reservoir pressure is same as the atmosphere), a command of 150 mbar (A) was set. The experiment was iterated three times with different reservoir sizes: no reservoir (B), a 15 ml reservoir (C) and a 50 ml reservoir (D). The total estimated enclosed volume (adding reservoir volume, dead volume and tubbing) was estimated to be respectively around 5 ml, 20 ml and 55 ml.
**Figure 27** shows the pressure profiles over time for each configuration. Regardless of pump pressurisation capabilities (flowrate and response time), there was no oscillation. Regarding overshoot there was none for the low reservoir size. The larger the reservoir volume, the higher an overshoot was generated. Thermal relaxation was more signification with a larger reservoir volume which justifies a higher overshoot required in order to compensate.
Other exposed capability of the algorithm is the anticipation of the pressure profile. This is especially highlighted for the smallest reservoir size where pressure profile is smoothly adjusted when near the setpoint without generating overshoot.

**Claims**

1. A method for controlling pressure in a fluidic system, the method comprising:

   - providing:

     ◦ a plurality of measurements from a pressure sensor, and
     ◦ a pressure setpoint,

   - computing a predictive model using at least a part of the measurements;
   - computing a deviation between a value of one of the plurality of measurements and a value of the setpoint; the deviation being further based on the predictive model;
   - computing a gain being based on the value of the setpoint and/or on the value of the one of the plurality of measurements;
   - computing a first correction factor based on the computed deviation and the computed gain;
   - computing a second correction factor based on the computed deviation, the computed gain and a previous value of the second correction factor;
   - computing an actuator command based on the first correction factor and the second correction factor; and
   - applying the computed actuator command to the fluidic system via one or more actuators configured to modify a value of the pressure.

2. The method of claim 1, wherein the fluidic system comprises a reservoir, and wherein:

   - the pressure sensor measures the pressure in the reservoir; and
   - each of the one or more actuators is an electro-valve, a pump, or a compressor.

3. The method of any of claims 1 to 2, wherein the using of at least a part of the measurements comprises using a time history of stored measurements from the pressure sensor.

4. The method of any of claims 1 to 3, wherein the predictive model is a linear regression model, and wherein preferably:

   - the computing of a linear regression model comprises obtaining a slope, and
   - the computing of a deviation is based on the slope.

**5.** The method of claim 4, wherein the computing of a deviation comprises:

- computing a difference between a value of one of the plurality of measurements and a value of the setpoint; and
- modifying the difference by a term dependent on the slope, preferably with a polynomial dependency on the slope, and more preferably with a linear dependency on the slope.

**6.** The method of any of claims 1 to 5, wherein the computed gain is related to the value of the setpoint, preferably quadratically related.

**7.** The method of any of claims 1 to 5, wherein:

- the computed gain is quadratically related to the value of the setpoint when the value of measurement is less than the setpoint; and
- the computed gain is quadratically related to the value of measurement when the value of measurement is above the setpoint.

**8.** The method of any one of claims 1 to 7, wherein the actuator command is a summation of the first correction factor and the second correction factor, preferably upon a scaling.

**9.** The method of any of claims 1 to 8, wherein the computing of the first correction factor comprises a multiplication of the square of the computed deviation by the computed gain.

**10.** The method of any of claims 1 to 9, wherein the computing of a second correction factor based on the computed deviation comprises a summation of:

- a multiplication of the computed deviation by the computed gain, and
- a previous value of the second correction factor.

**11.** The method of any of claims 1 to 10, wherein the computing of a second correction factor comprises applying a low pass filter to the second corrector factor, the low pass filter being based on the previous value of the second correction factor.

**12.** The method of any of claims 1 to 11, wherein the method further comprises linearizing the computed actuator command.

**13.** The method of any of claims 1 to 12, wherein

- the providing of the measurements from the pressure sensor has a first refresh rate,
- the computing of a predictive model, the computing of a deviation, the computing of a gain, the computing of a first correction factor, the computing of the second correction factor, and the computing of an actuator command have a second refresh rate, and
- the applying of the computed actuator command to the fluidic system via one or more actuators has a third refresh rate;

wherein preferably the third refresh rate is larger than the first refresh rate, and the second refresh rate is larger than each of the first and the third refresh rate.

**14.** A control apparatus configured for carrying out the method of any of claims 1 to 13.

**15.** A computer program comprising instructions which, when the program is executed by a computer, cause the computer to carry out the method of any of claims 1 to 13.

**Amended claims in accordance with Rule 137(2) EPC.**

**1.** A method for controlling pressure in a fluidic system, the method comprising:

- providing:

∘ a plurality of measurements from a pressure sensor, and
∘ a pressure setpoint,

- computing a predictive model using at least a part of the measurements, the predictive model being configured to predict a behavior of the fluidic system in the future using said part of the measurements;
- computing a deviation between a value of one of the plurality of measurements and a value of the setpoint; the deviation being further based on the predictive model;
- computing a gain being based on the value of the setpoint and/or on the value of the one of the plurality of measurements;
- computing a first correction factor based on the computed deviation and the computed gain;
- computing a second correction factor based on the computed deviation, the computed gain and a previous value of the computed second correction factor;
- computing an actuator command based on the first correction factor and the second correction factor; and
- applying the computed actuator command to the fluidic system via one or more actuators configured to modify a value of the pressure
wherein the predictive model is a linear regression model, and wherein the computing of a linear regression model comprises obtaining a slope, and the computing of a deviation is based on the slope;
wherein the computing of a deviation comprises:

- computing a difference between a value of one of the plurality of measurements and a value of the setpoint; and
- modifying the difference by a term dependent on the slope.

2. The method of claim 1, wherein the fluidic system comprises a reservoir, and wherein:

- the pressure sensor measures the pressure in the reservoir; and
- each of the one or more actuators is an electro-valve, a pump, or a compressor.

3. The method of any of claims 1 to 2, wherein the using of at least a part of the measurements comprises using a time history of stored measurements from the pressure sensor.

4. The method of any of claims 1 to 3, wherein:

- the term dependent on the slope, has a polynomial dependency on the slope, and preferably a linear dependency on the slope.

5. The method of any of claims 1 to 4, wherein the computed gain is related to the value of the setpoint, preferably quadratically related.

6. The method of any of claims 1 to 4, wherein:

- the computed gain is quadratically related to the value of the setpoint when the value of measurement is less than the setpoint; and
- the computed gain is quadratically related to the value of measurement when the value of measurement is above the setpoint.

7. The method of any one of claims 1 to 6, wherein the actuator command is a summation of the first correction factor and the second correction factor, preferably upon a scaling.

8. The method of any of claims 1 to 7, wherein the computing of the first correction factor comprises a multiplication of the square of the computed deviation by the computed gain.

9. The method of any of claims 1 to 8, wherein the computing of a second correction factor based on the computed deviation comprises a summation of:

- a multiplication of the computed deviation by the computed gain, and
- a previous value of the second correction factor.

**10.** The method of any of claims 1 to 9, wherein the computing of a second correction factor comprises applying a low pass filter to the second corrector factor, the low pass filter being based on the previous value of the second correction factor.

**11.** The method of any of claims 1 to 10, wherein the method further comprises linearizing the computed actuator command.

**12.** The method of any of claims 1 to 11, wherein

- the providing of the measurements from the pressure sensor has a first refresh rate,
- the computing of a predictive model, the computing of a deviation, the computing of a gain, the computing of a first correction factor, the computing of the second correction factor, and the computing of an actuator command have a second refresh rate, and
- the applying of the computed actuator command to the fluidic system via one or more actuators has a third refresh rate;

wherein preferably the third refresh rate is larger than the first refresh rate, and the second refresh rate is larger than each of the first and the third refresh rate.

**13.** A control apparatus configured for carrying out the method of any of claims 1 to 12.

**14.** A computer program comprising instructions which, when the program is executed by a computer communicatively coupled with a fluidic system comprising a pressure sensor and one or more actuators configured to modify a value of a pressure in the fluidic system, cause the computer to carry out the method of any of claims 1 to 12.

Fig. 1

Fig. 2A

Fig. 2B

310

inlet

outlet

311

312

Fig. 3A

330

inlet

outlet

320

Fig. 3B

340

S

341

inlet

342

outlet

Fig. 3C

Fig. 4

Fig. 5

Q=f(V)

## Fig. 6

P= f(W)

## Fig. 7

Fig. 8A

Fig. 8B

Fig. 9

Fig. 10

Initialization

Input : range, actuatorMax

1110

range: maximal achievable pressure or flowrate by the system
actuatorMax: maximal command for the actuator drive

Initialize at 0 internal variables:
integralPrev = 0
sensorMeasBuffer = 0

1120

End

Fig. 11

Dimensionless input variables:
sensorMeasAdim=sensorMeas/range
setpointAdim=setpoint/range
actuatorMeasAdim=actuatorMeas/actuatorMax

1210

Determine system error:
errAdim=setpointAdim-sensorMeasAdim

1220

Fig. 12

Fig. 13

**1410**

**1420**

Past

Future

Fig. 14A

**1430**

Future expected measurements

Past

Real measurements

Fig. 14B

Store sensor measure
in rotary buffer

Remove last value of the buffer

Shift all the buffer of one value forward

Replace first value of the buffer by
new sensor measurement
(sensorMeasAdim)

Return:
sensorMeasBuffer

Fig. 15

Fig. 16

Fig. 17

Fig. 18

Fig. 19

```
            ┌──────────────┐
            │   Integral   │
            │   corrector  │
            └──────┬───────┘
                   │
                   ▼
     ┌──────────────────────────────────┐
     │ Compute integral corrector factor: │
     │  integralCorrector = integralPrev + │
     │         gain * errAdim             │
     └──────────────┬───────────────────┘
                    │
                    ▼
              ╱─────────────╲        ┌─────────────────────┐
      ┌──────╱ integralCorrector ╲── Yes ──┤ integralCorrector = 1 │
      │      ╲     > 1 ?        ╱            └──────────┬──────────┘
      │       ╲─────────────╱                          │
      │             │                                  │
      │             No                                 │
      │             │                                  │
      │             ▼◄─────────────────────────────────┘
      │       ╱─────────────╲        ┌─────────────────────┐
      └──────╱ integralCorrector ╲── Yes ──┤ integralCorrector = 0 │
             ╲     < 0 ?        ╱            └──────────┬──────────┘
              ╲─────────────╱                          │
                    │                                  │
                    No                                 │
                    │                                  │
                    ▼◄─────────────────────────────────┘
     ┌──────────────────────────────────────────┐
     │   Apply a low-pass filter on integral factor: │
     │     integralCorrector = (integralCorrector +  │
     │ integralPrev * (gain - 0.01) *5) / ((gain - 0.01) *5 +1) │
     └──────────────────┬───────────────────────┘
                        │
                        ▼
     ┌──────────────────────────────────────────┐
     │  Store integral factor for next itineration: │
     │     integralPrev = integralCorrector       │
     └──────────────────┬───────────────────────┘
                        │
                        ▼
                ┌──────────────┐
                │    Return    │
                │ integralCorrector │
                └──────────────┘
```

## Fig. 20

$$y = 1.5359x^3 - 2.1641x^2 + 1.1587x + 0.2996$$

Fig. 21

Fig. 22

2310

2320

2330

2340

2360

P    2370

Atmospheric
pressure

2350

2380

## Fig. 23

Fig. 24

Fig. 25

Fig. 26

Fig. 27

Europäisches
Patentamt

European
Patent Office

Office européen
des brevets

# EUROPEAN SEARCH REPORT

Application Number

EP 22 30 6193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 019 774 A1 (FLUIGENT [FR]) 29 June 2022 (2022-06-29) * figures 3, 6 * * paragraphs [0061] - [0074] * | 1-15 | INV. G05D7/06 G05D16/20 G05B13/04 |
| A | WANG YUZHONG ET AL: "Improved fuzzy PID controller design using predictive functional control structure", ISA TRANSACTIONS, vol. 71, 30 November 2017 (2017-11-30), pages 354-363, XP085276539, ISSN: 0019-0578, DOI: 10.1016/J.ISATRA.2017.09.005 * figure 3 * | 1-15 | |
| A | EP 3 889 696 A1 (BONO ENERGIA S P A [IT]; MILANO POLITECNICO [IT]) 6 October 2021 (2021-10-06) * figure 4 * * paragraphs [0005] - [0008], [0013], [0022] - [0026], [0031] * | 1-15 | |
| A | US 6 056 008 A (ADAMS PAUL R [US] ET AL) 2 May 2000 (2000-05-02) * figures 3, 4 * | 1 | TECHNICAL FIELDS SEARCHED (IPC) G05D F04B G05B |
| A | SINGH RAVENDRA ET AL: "System-wide hybrid MPC-PID control of a continuous pharmaceutical tablet manufacturing process via direct compac", EUROPEAN JOURNAL OF PHARMACEUTICS AND BIOPHARMACEUTICS, ELSEVIER SCIENCE PUBLISHERS B.V., AMSTERDAM, NL, vol. 85, no. 3, 21 March 2013 (2013-03-21) , pages 1164-1182, XP028790975, ISSN: 0939-6411, DOI: 10.1016/J.EJPB.2013.02.019 * figures 1, 5 * | 1 | |

The present search report has been drawn up for all claims

| Place of search | Date of completion of the search | Examiner |
|---|---|---|
| Munich | 16 January 2023 | Schwarzenberger, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6193

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2023

| Patent document cited in search report | | Publication date | Patent family member(s) | | Publication date |
|---|---|---|---|---|---|
| EP 4019774 | A1 | 29-06-2022 | EP | 4019774 A1 | 29-06-2022 |
| | | | WO | 2022136275 A1 | 30-06-2022 |
| EP 3889696 | A1 | 06-10-2021 | NONE | | |
| US 6056008 | A | 02-05-2000 | AT | 256883 T | 15-01-2004 |
| | | | AU | 9478198 A | 12-04-1999 |
| | | | BR | 9812378 A | 12-09-2000 |
| | | | CA | 2302607 A1 | 01-04-1999 |
| | | | CA | 2668314 A1 | 01-04-1999 |
| | | | CA | 2668315 A1 | 01-04-1999 |
| | | | CN | 1271431 A | 25-10-2000 |
| | | | DE | 69820653 T2 | 30-09-2004 |
| | | | EP | 1015950 A1 | 05-07-2000 |
| | | | JP | 5503606 B2 | 28-05-2014 |
| | | | JP | 2001517821 A | 09-10-2001 |
| | | | JP | 2011258226 A | 22-12-2011 |
| | | | US | 6056008 A | 02-05-2000 |
| | | | US | 6178997 B1 | 30-01-2001 |
| | | | WO | 9915942 A1 | 01-04-1999 |

EPO FORM P0459

For more details about this annex : see Official Journal of the European Patent Office, No. 12/82